# EUROPÄISCHE PATENTSCHRIFT

(11) **EP 0 582 899 B1**
(45) Veröffentlichungstag und Bekanntmachung des Hinweises auf die Patenterteilung: **08.04.1998**
(21) Anmeldenummer: 93112091.9
(22) Anmeldetag: 28.07.1993
(51) Int. Cl.: A61C 1/08, A61C 1/00, A61C 3/00, A61B 17/36, B23K 26/14

(54) **Zahnärztliches Instrument zur Behandlung von Zähnen mittels Laserstrahlen**
Medical instrument for dental treatment by laser beams
Instrument dentaire pour le traitement des dents par des rayons laser

(30) Priorität: 10.08.1992 DE 4226461
(43) Veröffentlichungstag der Anmeldung: 16.02.1994
(73) Patentinhaber: SIEMENS AKTIENGESELLSCHAFT, 80333 München (DE)
(72) Erfinder: Beerstecher, Lutz, D-64625 Bensheim (DE); Goisser, Siegfried, D-64683 Einhausen (DE); Sutter, Ralf, D-69469 Weinheim (DE)

(56) Entgegenhaltungen:
- EP-A- 0 375 578
- EP-A- 0 523 506
- EP-A- 0 530 574
- DE-A- 3 637 568
- DE-C- 4 038 809
- US-A- 4 503 853
- US-A- 4 826 431

## Beschreibung

Die Erfindung bezieht sich auf ein zahnärztliches Instrument zur Behandlung von Zähnen mit Laserstrahlen, die von einer im Kopfteil des Instruments angeordneten, ein oder mehrere Übertragungselement umfassenden Optik abgegeben werden, wobei dem Instrument über eine Zuleitung ein gasförmiges Medium zugeführt wird, welches applikationsseitig im wesentlichen in Strahlenaustrittsrichtung aus dem Kopfteil abströmt, und wobei im Bereich des letzten Übertragungselementes der Optik lichtaustrittsseitig Führungs- und Leitkanäle vorgesehen sind.

Ein derartiges Instrument ist beispielsweise aus US-PS 4503853, in anderer Version aus EP-A-375 578 und DE-A-3 800 555 bekannt.

Problematisch bei Instrumenten, die optische Lichtaustrittsfenster aufweisen, ist, daß sich auf der letzten optischen Grenzfläche der Strahlenoptik während der Behandlung Ablagerungen, sei es in Form von Spraywasser, Nebel oder Ablationsprodukten aus der Präparationsstelle, bilden können, die infolge von Dämpfungseffekten zumindest die Lichtübertragungsleistung und damit den Wirkungsgrad verschlechtern, wenn nicht sogar die Optik beschädigen können.

Bei der aus der DE-92 04 412 bekannten Anordnung wird dieses Problem nicht dadurch gelöst, daß in Nähe des Strahlenauslasses eine Sprühdüse angeordnet ist, aus welcher Kühl- oder Reinigungsflüssigkeit in den dem Auslaß unmittelbar benachbarten Bereich gesprüht werden kann, um so einerseits eine Reinigung des Auslasses und andererseits eine Kühlung des von der Laserstrahlung beaufschlagten Materials bewirken. Denn eine Reinigung von optischen Grenzflächen einer Strahlenoptik mit Wasser ist aus zwei Gründen bedenklich; einerseits ist Wasser ohnehin stets ein Verschmutzungsträger und enthält immer kleinste Schmutz- oder andere Partikel, die sich an den Grenzflächen der Strahlenoptik niederschlagen können. Andererseits tritt, wenn Wasser auf optische Grenzflächen auftritt, an denen Laserstrahlen austreten, ein unerwünschter Dämpfungseffekt auf, der den Wirkungsgrad der Lichtübertragungsleistung verschlechtert.

Ähnlich wie bei zahnärztlichen Instrumenten, die in konventioneller Weise mit einem rotierenden Behandlungswerkzeug betrieben werden, ist es auch bei Instrumenten zur Behandlung mit Laserstrahlen bekannt, die Präparationsstelle mit Luft, Wasser oder mit einem Luft/Wasser-Gemisch zu kühlen. Die Kühlmedien werden dabei konzentrisch zum Lichtleiter bis zu einer Austrittsdüse geführt (US-PS 4 503 853 und 4 826 431).

Aus der nicht vorveröffentlichten EP-0 530 574 A2 ist eine Vorrichtung zur Behandlung von Zahnhartsubstanz mittels Laserstrahlen bekannt, bei der in einer Ausführungsform ein Teil des zur Kühlung vorgesehenen Druckgases in einen Gasbehälter geleitet wird, der sich an die applikationsseitige Optik anschließt. Der Gasbehälter sorgt für eine gleichmäßige Druckverteilung und soll ein Zurückschleudern von Ablationspartikeln über den Hohlkanal, der sich an den Gasbehälter anschließt, verhindern.

Der im Anspruch 1 angegebenen Erfindung liegt die Aufgabe zugrunde, bei einem zahnärztlichen Instrument der eingangs genannten Gattung dafür zu sorgen, daß das letzte optische Übertragungselement der Optik, an der die Laserstrahlen entweder direkt als Freistrahl oder indirekt über einen Hohlleiter austreten, gezielt sauber gehalten werden kann, ohne eine Verschlechterung des Wirkungsgrades in Kauf nehmen zu müssen.

Durch die erfindungsgemäßen Maßnahmen lassen sich Ablagerungen an der Optik selbst dann wirksam vermeiden, wenn man im Bereich des Lichtaustritts eine Sprühdüse für Wasser zur Kühlung der Präparationsstelle anordnen würde.

Wenn die Laserstrahlen im Freistrahl austreten, ist es vorteilhaft, im Anschluß an das Übertragungselement, das in diesem Falle zweckmäßigerweise eine Linse sein wird, einen Abstandshalter aus für die verwendete Laserstrahlung nicht transparentem Material vorzusehen. Dieser Abstandshalter dient einerseits dazu, eine Abtragung im optimalen Fokusbereich zu ermöglichen, zum anderen dient er als Schutz gegen ungewolltes Abtragen bzw. Beschädigen der im Strahlungsbereich liegenden optischen Teile. Vorteilhaft ist es, zur Führung des Spülstrahls einen konischen Abstandshalter vorzusehen; damit läßt sich ein Niederschlag von Ablationsprodukten oder Spraywassernebel auf der relativ hochwertigen Optik am Strahlaustritt vermeiden. Ein weiterer Vorteil liegt darin, daß eventuelle Streustrahlen wirksam ausgeblendet werden.

Wenn die Laserstrahlen im Anschluß an das Übertragungselement in einen Hohlleiter geleitet werden, ist es vorteilhaft, zwischen Übertragungselement und Hohlleiter eine Abdeckplatte aus für die Laserstrahlen durchgängigem Material vorzusehen. Die Abdeckplatte ist vorteilhafterweise leicht auswechselbar mittels eines Dichtelements im Kopfgehäuse so einsetzbar, daß das gasförmige Medium im wesentlichen nur über den Hohlleiter abströmen kann. Damit wird ebenfalls der vorerwähnte Effekt erreicht, daß sich kein Niederschlag auf der letzten Grenzfläche der Optik bilden kann.

Zwei Ausführungsbeispiele der Erfindung werden nachfolgend anhand der Zeichnung näher erläutert.

Es zeigen:
Figur 1 einen Ausschnitt aus einem zahnärztlichen Instrument gemäß der Erfindung,
Figur 2 eine Variante zu Figur 1.

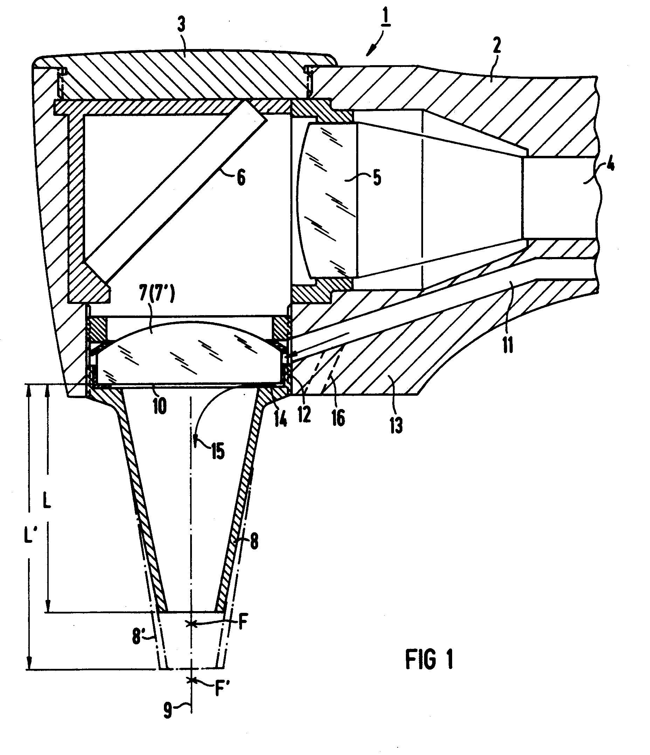

Die Figur 1 zeigt in einer Längsschnittdarstellung den vorderen Teil eines allgemein mit 1 bezeichneten zahnärztlichen Instruments, welches in bekannter Weise eine langgestreckte Griffhülse 2 enthält, die in einem Kopfteil 3 endet. In der Griffhülse 2 ist zentrisch ein Lichtleiter 4 angeordnet, der von einer nicht dargestellten, extern des Instruments angeordneten Laserstrahlenquelle gespeist wird. Die stirnseitig des Lichtleiters 4 austretenden Laserstrahlen treffen zunächst auf eine erste Linse 5, werden von dieser auf einen Umlenkspiegel 6 geworfen, wo sie nach Totalreflexion auf eine zweite Linse 7 auftreffen, die die austretenden Strahlen auf einen Brennpunkt F fokussieren, der sich unmittelbar außerhalb des freien Endes eines konischen Abstandshalters 8 befindet.

In der Darstellung sind, bezogen auf die mit 9 bezeichnete Längssymmetrieachse des Kopfgehäuses 3, zwei Versionen (8, 8') eines Abstandshalters dargestellt, die unterschiedliche Längen und Öffnungsweiten aufweisen. Während der in der linken Hälfte dargestellte Abstandshalter 8 bei einer Länge L von etwa 10 mm eine Austrittsöffnung mit einem Durchmesser von etwa 1 bis 3 mm aufweist, sind Länge L' und Austrittsöffnung bei der rechts der Längssymmetrieachse 9 dargestellten zweiten Version um etwa 1/3 größer dimensioniert. Auch bei dieser zweiten Version liegt der Brennpunkt F' knapp außerhalb der Konusöffnung.

Der konische Abstandshalter 8 bzw. 8' ermöglicht ein optimales Abtragen von Zahnsubstanz praktisch im Fokusbereich. Vorteilhafterweise ist der Abstandshalter aus einem für die verwendete Laserstrahlung nicht transparentem Material, z.B. aus Metall, gefertigt, wodurch ein guter Schutz gegen ungewolltes Abtragen von im Strahlungsbereich liegenden Objekten sowie ein Ausblenden von eventuellen Streustrahlen gegeben ist. Ein weiterer wesentlicher Nutzeffekt liegt in der optimalen Führung eines gasförmigen Mediums, welches zur Vermeidung von Ablagerungen über die optische Grenzfläche 10 der Linse 7 gelenkt wird. Das gasförmige Medium wird zunächst - wie durch Pfeile angegeben - über einen Zuleitungskanal 11, der in bekannter Weise innerhalb der Griffhülse 2 verlegt ist, in einen Zwischenraum 12 zwischen Linse 7 und den Gehäusewandungen 13 des Kopfteils 3 geleitet, umspült dann seitlich die Linse 7 und wird anschließend über einen Ringspalt 14, der zwischen Linse 7 und Abstandshalter 8 gebildet ist, quer zur Längssymmetrieachse 9 umgelenkt, wodurch die optische Grenzschicht 10 der Linse 7 bespült wird. Der Ringspalt 14 enthält zweckmäßigerweise (nicht dargestellte) Leitstege, die so angeordnet sind, daß Teile der Spülluft über die optische Mitte der Linse 7 hinweggeleitet werden, so daß insbesondere das optische Zentrum optimal bespült und damit von einfallenden Partikeln freigehalten wird. Vorteilhafterweise ist die Anordnung so getroffen, daß eine asymmetrische Einströmung der Spülluft gegeben ist.

Die Konizität des Abstandshalters sorgt dafür, daß der Medienstrom optimal in Richtung Austrittsöffnung geleitet wird. Das Spülmedium ist hier vorteilhafterweise Druckluft, die gleichsam zur Bildung eines Wasser/Luft-Gemisches (Sprays) herangezogen werden kann, welches in bekannter Weise über einen in der Darstellung gestrichelt eingezeichneten und auf die Präparationsstelle gerichteten Austrittskanal 16 austreten kann.

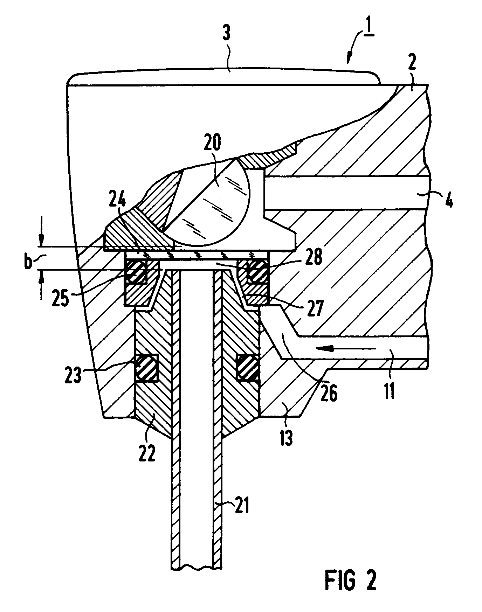

Die Figur 2 zeigt eine Ausführungsform, bei der im Kopfteil 3 des Instruments ein Übertragungselement 20 vorgesehen ist, welches die Funktion sowohl der beiden Linsen 5 und 7 als auch des Umlenkspiegels 6 bei der Ausführung nach

Figur 1 in sich vereint. Während bei der Ausführungsform nach Figur 1 die Lichtstrahlen im Freistrahl aus der Linse 7 austreten, werden die am Übertragungselement 20 austretenden Strahlen in einen Hohlleiter 21 eingekoppelt. Der Hohlleiter ist an einer Halterung 22 befestigt ist, die mittels eines O-Ringes 23 im Kopfteil 3 leicht lösbar und damit auswechselbar gehaltert ist.

In dem zum Einkoppeln der Strahlen erforderlichen Abstand (b) zwischen der Lichtaus- und -eintrittsfläche des optischen Übertragungselements 20 bzw. des Hohlleiters 21 ist eine Abdeckplatte 24 aus einem für die verwendete Laserstrahlung durchlässigem Material angeordnet. Diese Abdeckplatte 24 dient als wirksamer Schutz vor Ablagerungen von Ablationsprodukten oder Spraynebel an den optischen Grenzflächen während einer Präparation bzw. vor Beschädigung der Optik durch diese Partikel. Die Abdeckplatte 24 ist mittels eines O-Ringes 25 leicht auswechselbar im Kopfteil 3 gehaltert. Ein weiterer Nutzeffekt der Abdeckplatte ist, daß diese zusammen mit den Gehäusewandungen 13 des Kopfteils 3 und der Halterung 22 Führungs- und Leitkanäle bzw. Kammern 26, 27, 28 bildet, über die aus der Zuleitung 11 kommendes gasförmiges Medium, insbesondere Druckluft, in den Hohlleiter 21 geführt wird. Aufgrund der Luftströmung ist dafür gesorgt, daß die oben erwähnten Partikel erst gar nicht in den Hohlleiter gelangen können.

Abschließend sei darauf hingewiesen, daß der Lichtaustritt nicht zwingend notwendig in Richtung der Längssymmetrieachse des Kopfgehäuses verlaufen muß, daß vielmehr auch über eine geeignete Umlenkoptik ein seitlicher Lichtaustritt am freien Ende des Hohlleiters 21 bzw. des Abstandshalters 8 bzw. 8' denkbar und im Rahmen der Erfindung möglich ist.

## Patentansprüche

1. Zahnärztliches Instrument zur Behandlung von Zähnen mit Laserstrahlen, die von einer im Kopfteil (3) des Instruments angeordneten, ein oder mehrere Übertragungselemente (5, 6, 7; 20, 24) umfaßenden Optik abgegeben werden, wobei dem Instrument über eine Zuleitung (11) ein gasförmiges Medium zugeführt wird, welches applikationsseitig über einen Führungskanal (8, 8', 21) im wesentlichen in Strahlenaustrittsrichtung aus dem Kopfteil (3) abströmt, und wobei im Bereich des letzten Übertragungselements (7, 24) der Optik lichtaustrittsseitig Führungs- und Leitkanäle (12, 14; 26, 27, 28) vorhanden sind, dadurch gekennzeichnet, daß die Führungs- und Leitkanäle so angeordnet sind, daß sie das gasförmige Medium direkt über die Oberfläche des letzten Übertragungselements (7, 24) leiten bevor das Medium in Strahlenaustrittsrichtung umgelenkt und über den Führungskanal (8, 8', 21) abgeleitet wird.

2. Instrument nach Anspruch 1, bei dem das letzte Übertragungselement eine Linse (7) ist, welche die Strahlen im Freistrahl auf einen außerhalb des Kopfteils (3) befindlichen Brennpunkt (F, F') fokussiert und bei dem im Anschluß an die Linse ein den Führungskanal bildender Abstandshalter (8, 8') aus für Lichtstrahlen undurchlässigem Material vorgesehen ist, dessen Länge (L. L') so bemessen ist, daß sich der Brennpunkt (F, F') unmittelbar nach der Austrittsöffnung außerhalb des Abstandshalters befindet.

3. Instrument nach Anspruch 2, bei dem der Abstandshalter (8, 8') konisch ausgebildet ist.

4. Instrument nach Anspruch 2 oder 3, bei dem ein metallischer Abstandshalter (8, 8') vorgesehen ist.

5. Instrument nach Anspruch 1, bei dem als Führungskanal ein Hohlleiter (21) vorgesehen ist, in den die austretenden Strahlen eingekoppelt werden und bei dem in einem zum Einkoppeln der Strahlen erforderlichen Abstand (b) zwischen der Lichtaustrittsfläche einer Linse (20) und der Eintrittsfläche des Hohlleiters (21) eine das letzte Übertragungselement bildende Abdeckplatte (24) aus für die Lichtstrahlen durchlässigem Material vorgesehen ist, über die das gasförmige Medium geleitet wird.

6. Instrument nach Anspruch 5, bei dem die Abdeckplatte (24) mittels eines Dichtelements (25) im Kopfteil (3) so eingesetzt ist, daß das gasförmige Medium im wesentlichen nur über den Hohlleiter (21) abströmen kann.

7. Instrument nach Anspruch 5, bei dem der Hohlleiter (21) in einer Halterung (22) befestigt ist, die leicht wechselbar im Kopfteil (3) gehaltert ist.

8. Instrument nach einem der Ansprüche 1 bis 7, bei dem das gasförmige Medium zunächst seitlich des letzten Übertragungselements (7, 24) einströmt, dann durch die Führungs- und Leitkanäle (12, 14) quer zur Strahlenaustrittsrichtung umgelenkt wird.

9. Instrument nach Anspruch 8, bei dem die Führungs- und Leitkanäle (12, 14) so angeordnet sind, daß das gasförmige Medium asymmetrisch einströmt.

## Claims

1. Dental instrument for the treatment of teeth with laser beams which are emitted by an optical system arranged in the head part (3) of the instrument and comprising one or more transmission elements (5, 6, 7; 20, 24), whereby a gaseous medium is supplied to the instrument by way of a supply line (11), which medium flows away out of the head part (3) on the application side by way of a guide channel (8, 8', 21) substantially in the beam exit direction, and whereby, in the region of the last transmission element (7, 24) of the optical system on the light exit side, guide and baffle channels (12, 14; 26, 27, 28) are present, characterized in that the guide and baffle channels are arranged in such a way that they guide the gaseous medium directly across the surface of the last transmission element (7, 24) before the medium is deflected in the beam exit direction and is diverted by way of the guide channel (8, 8', 21).

2. Instrument according to claim 1, wherein the last transmission element is a lens (7) which focuses the beams in the free beam on to a focal point (F, F') located outside the head part (3) and wherein following the lens a spacer (8, 8') forming the guide channel and consisting of material which is impenetrable by light beams is provided, the length (L, L') of which spacer is dimensioned such that the focal point (F, F') is located immediately after the exit opening outside the spacer.

3. Instrument according to claim 2, wherein the spacer (8, 8') is constructed conically.

4. Instrument according to claim 2 or 3, wherein a metallic spacer (8, 8') is provided.

5. Instrument according to claim 1, wherein as guide channel a hollow conductor (21) is provided, into which the exiting beams are coupled, and wherein at a distance (b), necessary for coupling in the beams, between the light exit surface of a lens (20) and the entrance surface of the hollow conductor (21) a cover plate (24) forming the last transmission element and consisting of material penetrable by the light beams is provided, across which the gaseous medium is guided.

6. Instrument according to claim 5, wherein the cover plate (24) is inserted by means of a sealing element (25) in the head part (3) in such a way that the gaseous medium can flow away substantially only across the hollow conductor (21).

7. Instrument according to claim 5, wherein the hollow conductor (21) is fastened in a mount (22) which is held in the head part (3) such that it can be easily replaced.

8. Instrument according to one of claims 1 to 7, wherein the gaseous medium initially flows in at the side of the last transmission element (7, 24) and is then deflected by the guide and baffle channels (12, 14) transversely relative to the beam exit direction.

9. Instrument according to claim 8, wherein the guide and baffle channels (12, 14) are arranged in such a way that the gaseous medium flows in asymmetrically.

## Revendications

1. Instrument de soins dentaires pour le traitement de dents par des rayons laser, qui sont émis par une optique disposée dans la partie (3) de tête de l'instrument et comportant un ou plusieurs éléments (5, 6, 7, 20, 24) de transmission, un fluide gazeux étant envoyé à l'instrument par l'intermédiaire d'un conduit (11), d'amenée, fluide gazeux qui sort du côté d'application par un canal (8, 8', 21) de passage sortant de la partie (3) de tête sensiblement dans le sens de sortie du rayonnement, et il est prévu, dans la région du dernier élément (7, 24) de transmission de l'optique, des canaux (12, 14, 26, 27, 28) de passage et de guidage du côté de la sortie de lumière, caractérisé en ce que les canaux de passage et de guidage sont disposés de sorte qu'ils font passer le fluide gazeux directement sur la surface du dernier élément (7, 24) de transmission avant que le fluide ne soit dévié dans le sens de sortie de rayonnement et évacué par l'intermédiaire du canal (8, 8', 21) de guidage.

2. Instrument suivant la revendication 1, dans lequel le dernier élément de transmission est une lentille (7), qui focalise les rayons sous forme de rayonnement libre sur un foyer (F, F') se trouvant à l'extérieur de la partie (3) de tête et dans lequel est prévue à la suite de la lentille une entretoise (8, 8'), formant le canal de passage en un matériau opaque au rayonnement lumineux, dont la longueur (L, L') est telle que le foyer (F, F') se trouve juste après l'ouverture de sortie à l'extérieur de l'entretoise.

3. Instrument suivant la revendication 2, dans lequel l'entretoise (8, 8') est de forme conique.

4. Instrument suivant la revendication 2 ou 3, dans lequel il est prévu une entretoise (8, 8') métallique.

5. Instrument suivant la revendication 1, dans lequel il est prévu un conduit (21) creux est prévue en tant que canal de passage, dans lequel les rayonnements sortant sont injectés, et dans lequel il est prévu, à une distance (b) nécessaire à l'injection des rayonnements entre la surface de sortie de la lumière d'une lentille (20) et la surface d'entrée du conduit (21) creux, une plaque (24) de recouvrement formant le dernier élément de transmission, en un matériau transparent aux rayons lumineux, et sur laquelle passe le fluide gazeux.

6. Instrument suivant la revendication 5, dans lequel la plaque (24) de recouvrement est insérée dans la partie (3) de tête au moyen d'un élément (25) d'étanchéité, de sorte que le fluide gazeux ne peut s'évacuer sensiblement que par l'intermédiaire du conduit (21) creux.

7. Instrument suivant la revendication 5, dans lequel le conduit (21) creux est fixée dans un support (22) qui est monté dans la partie (3) de tête de manière à pouvoir être échangé facilement.

8. Instrument suivant l'une des revendications 1 à 7, dans lequel le fluide gazeux entre d'abord latéralement au dernier élément (7, 24) de transmission, puis est dévié par les canaux (12, 14) de passage et de guidage transversalement à la direction de sortie du rayonnement.

9. Instrument suivant la revendication 8, dans lequel les canaux (12, 14) de passage et de guidage sont disposés de sorte que le fluide gazeux entre de manière dissymétrique.
